# EUROPÄISCHE PATENTSCHRIFT

(11) **EP 3 024 705 B1**
(45) Veröffentlichungstag und Bekanntmachung des Hinweises auf die Patenterteilung: **25.10.2017**
(21) Anmeldenummer: 14744065.5
(22) Anmeldetag: 24.07.2014
(51) Int. Cl.: B60R 16/023, H05K 1/02

(54) **SCHALTUNGSMODUL ZUM TRENNEN VON KOMPONENTEN EINES MEHRSPANNUNGSBORDNETZES**
SWITCHING MODULE FOR SEPARATING COMPONENTS OF A MULTIPLE VOLTAGE VEHICLE CIRCUIT
MODULE INTERRUPTEUR POUR SÉPARER DES COMPOSANTS D'UN CIRCUIT MULTITENSIONS DE VÉHICULE

(30) Priorität: 24.07.2013 DE 102013012615
(43) Veröffentlichungstag der Anmeldung: 01.06.2016
(73) Patentinhaber: Brose Fahrzeugteile GmbH & Co. Kommanditgesellschaft, Bamberg, 96052 Bamberg (DE)
(72) Erfinder: MIJAC, Anto, 96052 Bamberg (DE); DREMEL, Benedikt, 96135 Stegaurach (DE)
(74) Vertreter: Maikowski & Ninnemann Patentanwälte Partnerschaft mbB
(86) Internationale Anmeldenummer: PCT/EP2014/065867
(87) Internationale Veröffentlichungsnummer: WO 2015/011212

(56) Entgegenhaltungen:
- EP-A2- 1 155 919
- EP-B1- 1 652 281
- DE-A1- 10 156 416
- US-A1- 2002 172 351
- US-A1- 2004 222 767

## Beschreibung

Die vorliegende Erfindung betrifft ein Mehrspannungsbordnetz für ein Fahrzeug gemäß dem Oberbegriff des Patentanspruchs 1 sowie ein Schaltungsmodul zum Trennen eines Mehrspannungsbordnetzes gemäß dem Oberbegriff des Patentanspruchs 15.

Gelegentlich werden Fahrzeuge, wie PKWs, LKWs, Züge und dergleichen mit einem Mehrspannungsbordnetz ausgestattet, bei dem ein erstes Teilnetz ausgebildet ist, bei einer ersten Betriebsspannung betrieben zu werden und ein zweites Teilnetz ausgebildet ist, bei einer zweiten Betriebsspannung betrieben zu werden. Bekannt sind in diesem Zusammenhang insbesondere das 12 V Teilnetz sowie das 48 V Teilnetz für PKWs.

Einem der beiden Teilnetze kann ein Senderempfänger zugeordnet sein, der über einen ersten Masseanschluss des ersten Teilnetzes, beispielsweise in Gestalt eines ersten Massebolzens, auf Masse geschaltet ist. Der Senderempfänger dient üblicherweise zum Senden und Empfangen von Steuersignalen, wobei im Senderempfänger auch eine Weiterverarbeitung der empfangenen Steuersignale erfolgen kann. Ein Beispiel für einen solchen Senderempfänger bildet der LIN- (Local Interconnect Network) Transceiver. Der Senderempfänger kann bei der ersten Betriebsspannung betrieben werden, also beispielsweise bei 12 V.

Dem zweiten Teilnetz kann eine Steuereinheit zugeordnet sein, wie ein Mikrocontroller. Die Steuereinheit und der Senderempfänger können in einem Gehäuse integriert sein und insoweit als einstückige Komponente verbaut werden. Die Steuereinheit ist über einen zweiten Masseanschluss des zweiten Teilnetzes, der vom ersten Masseanschluss räumlich getrennt angeordnet ist und beispielsweise in Gestalt eines zweiten Massebolzens vorliegt, auf dieselbe Masse geschaltet wie der Senderempfänger. Bei der Masse handelt es sich üblicherweise um die Masse des Fahrzeuges.

Die Steuereinheit operiert in der Regel bei einer Spannung von 5 V oder 3,3 V. Diese Spannung wird der Steuereinheit üblicherweise über einen Spannungsumsetzer, wie beispielsweise ein DC/DC-Wandler oder ein Linearregler, zur Verfügung gestellt, der die zweite Betriebsspannung, beispielsweise 48 V, entsprechend wandelt. Die Steuereinheit führt elektronischen Einheiten der Fahrzeugelektronik, wie beispielsweise einem Treiber eines leistungselektronischen Schalters, Ansteuersignale zu. Diese elektronischen Einheiten steuern sodann einen oder mehrere elektrische Motoren des Fahrzeuges an, beispielsweise einen elektrischen Fahrzeugantrieb, einen Sitzverstellungsantrieb, etc.

Der Senderempfänger des ersten Teilnetzes ist kommunikativ an die Steuereinheit des zweiten Teilnetzes gekoppelt. Üblicherweise sind dazu zwischen dem Senderempfänger und der Steuereinheit eine Anzahl von Steuersignalpfaden angeordnet, die einen oder mehrere Signalausgänge des Senderempfängers mit Signaleingängen der Steuereinheit und Signalausgänge der Steuereinheit mit den Signaleingängen des Senderempfängers verbinden. Die Steuersignalpfade übertragen Steuersignale von der Steuereinheit an den Senderempfänger und Steuersignale vom Senderempfänger an die Steuereinheit. Üblicherweise handelt es sich bei diesen Steuersignalpfaden um niederohmige Direktverbindungen. Derartige Steuersignalpfade sind beispielsweise aus der Fig. 12 des Datenblatts AN00093 zu dem PHILIPS LIN-Transceiver TJA 1020 bekannt.

Problematisch bei Mehrspannungsbordnetzen ist, dass der Senderempfänger des ersten Teilnetzes üblicherweise an einen ersten Masseanschluss angeschlossen ist und die Steuereinheit des zweiten Teilnetzes üblicherweise an einen zweiten, von dem ersten Masseanschluss räumlich getrennten Masseanschluss angeschlossen ist. Sowohl der erste Masseanschluss und der zweite Masseanschluss sind im Ergebnis jedoch sternförmig mit derselben Masse, nämlich der Fahrzeugmasse, verbunden. Kommt es in dem ersten Teilnetz und/oder in dem zweiten Teilnetz zu einer fehlerhaften Betriebsspannungsversorgung, so können im Mehrspannungsbordnetz und insbesondere in den Steuersignalpfaden oder innerhalb einer Komponente, die an beide Teilnetze angeschlossen ist, Ausgleichsströme auftreten, die Einheiten des ersten Teilnetzes und/oder des zweiten Teilnetzes beschädigen und mitunter sogar zerstören können.

Die EP 1 291 998 B1 schlägt in diesem Zusammenhang vor, zwischen den beiden Teilnetzen, sprich zwischen den beiden Spannungsebenen, eine galvanische Trennung vorzusehen, beispielsweise in Gestalt eines üblichen Transformators. Ferner sind dort Überwachungsmodule vorgesehen, die eine Isolationsüberwachung der Teilnetze durchführen. Die Überwachungsmodule sind in einem Steuergerät integriert, das mit mindestens zwei Spannungsebenen in Verbindung steht. Das Steuergerät weist ferner eine Einrichtung zum Trennen der Verbindung eines oder mehrerer Teilnetze vom Steuergerät und/oder eine Einrichtung zum Abschalten des Steuergeräts bei Detektion einer fehlerhaften Betriebsspannungsversorgung auf.

Nachteilig an diesem vorbekannten Ansatz ist der aufwendige Aufbau. Es ist eine Vielzahl von Überwachungsmodulen notwendig und darüber hinaus wird eine galvanische Trennung mittels eines Transformators vorgeschlagen, der ein hohes Gewicht aufweist und vergleichsweise hohe Kosten mit sich bringt.

Die DE 10 2012 215 542 A1 spricht das Problem bei einer gemeinsamen Masseanbindung in einem Mehrspannungsbordnetz an. Kommt es zu einer Störung auf dieser gemeinsamen Masseleitung, so kann es zu einer Verpolung von Komponenten in dem Teilnetz mit niedriger Spannung kommen. Dort wird zur Lösung des Problems vorgeschlagen, einen weiteren Masseanschluss vorzusehen, dem Messmittel zugeordnet sind, die dafür eingerichtet sind, einen Stromfluss über den weiteren Masseanschluss zu messen. Ferner sind Diagnosemittel vorgesehen, die auf Grundlage des gemessenen Stromflusses in Abhängigkeit von wenigstens einem Betriebszustand des Mehrspannungsbordnetzes eine Störung in dem gemeinsamen Masseanschluss und/oder in dem weiteren Masseanschluss diagnostizieren.

Aus der Druckschrift US 2004/222767 A1 ist ein Mehrspannungsbordnetz mit Merkmalen des Oberbegriffs des Anspruchs 1 bekannt.

Aufgabe der vorliegenden Erfindung ist es, ein Mehrspannungsbordnetz vorzuschlagen, das eine verbesserte Fehlerstromfestigkeit aufweist und sich zugleich durch einen einfachen Aufbau auszeichnet. Ferner ist es eine Aufgabe der vorliegenden Erfindung, ein Schaltungsmodul zum Trennen von Teilnetzen eines Mehrspannungsbordnetzes vorzuschlagen.

Diese Aufgaben werden gemäß einem ersten Aspekt der Erfindung gelöst durch ein Mehrspannungsbordnetz mit den Merkmalen des Anspruchs 1. Gemäß einem zweiten Aspekt werden die Aufgaben gelöst durch ein Schaltungsmodul mit den Merkmalen des Anspruchs 15. Merkmale vorteilhafter Weiterbildungen sind in den Unteransprüchen angegeben.

Gemäß dem ersten Aspekt der Erfindung ist vorgesehen, dass der erste Steuersignalpfad, der einen ersten Signalausgang des Senderempfängers an einen ersten Signaleingang der Steuereinheit koppelt, ein erstes Schaltungsmodul umfasst.

Über das erste Schaltungsmodul ist der erste Steuersignalpfad einerseits auf den ersten Masseanschluss und/oder den zweiten Masseanschluss geschaltet und andererseits mit der ersten Betriebsspannung und/oder mit der zweiten Betriebsspannung beaufschlagt. Das erste Schaltungsmodul des ersten Steuersignalpfads ist ausgebildet, einen sperrenden Zustand einzunehmen, bei dem die Übertragung des ersten Steuersignals von dem ersten Signalausgang zu dem ersten Signaleingang über den ersten Steuersignalpfad unterbunden wird. Der sperrend Zustand wird beispielsweise auf eine fehlerhafte Betriebsspannungsversorgung im ersten Teilnetz und/oder im zweiten Teilnetz hin eingenommen.

Die vorliegende Erfindung geht davon aus, dass an ein Mehrspannungsbordnetz oder an eine Komponente des Mehrspannungsbordnetzes, welche an beide Betriebsspannungsanschlüsse und beide Masseanschlüsse gekoppelt ist, zunehmend die Anforderung gestellt wird, im Falle einer fehlerhaften Betriebsspannungsversorgung eine definierte Fehlerstromfestigkeit aufzuweisen. Insbesondere soll in dem Mehrspannungsbordnetz vermieden werden, dass ein Durchschlag von dem Teilnetz mit der höheren Betriebsspannung in das Teilnetz mit der niedrigeren Betriebsspannung eine Komponente des Mehrspannungsbordnetzes beschädigt oder zerstört.

Die fehlerhafte Betriebsspannungsversorgung liegt beispielsweise dann vor, wenn der Senderempfänger und/oder die Steuereinheit nicht mehr auf Masse geschaltet ist. Ein solcher Vorfall wird auch als Masseabriss oder Masseverlust bezeichnet. Ferner liegt eine fehlerhafte Betriebsspannungsversorgung vor, wenn im ersten Teilnetz und/oder im zweiten Teilnetz ein Kurzschluss entstanden ist, und/oder ein Potentialunterschied zwischen dem ersten Masseanschluss und dem zweiten Masseanschluss einen Schwellenwert, wie beispielsweise +/- 1 V, überschreitet.

Letzterer Fehlerfall wird auch als Masseversatz bezeichnet. Der Betrag des Schwellenwerts, bei dem das erste Schaltungsmodul den sperrenden Zustand einnimmt, kann durch Dimensionierung von Komponenten des ersten Schaltungsmoduls festgelegt werden.

Ein aufgrund einer solchen fehlerhaften Betriebsspannungsversorgung entstehender Fehlerstrom darf gemäß einem Anforderungskatalog einen bestimmten Maximalwert, wie beispielsweise einige wenige Mikro-Ampere, nicht überschreiten. Für eine solche Strombegrenzung ist das erste Schaltungsmodul, das der erste Steuersignalpfad erfindungsgemäß umfasst, geeignet, da der erste Steuersignalpfad über das erste Schaltungsmodule einerseits auf den ersten Masseanschluss und/oder den zweiten Masseanschluss geschaltet ist und andererseits mit der ersten Betriebsspannung und/oder mit der zweiten Betriebsspannung beaufschlagt ist. Eine fehlerhafte Betriebsspannungsversorgung wirkt sich demnach unmittelbar auf den ersten Steuersignalpfad aus, und zwar dergestalt, dass in dem ersten Steuersignalpfad eine Übertragung des ersten Steuersignals unterbunden wird. Der erste Steuersignalpfad sperrt also in Reaktion auf eine fehlerhafte Betriebsspannungsversorgung.

Eine Trennung des ersten Teilnetzes von dem zweiten Teilnetz des Mehrspannungsbordnetzes findet also zwischen dem Senderempfänger, der beispielsweise einen LIN-(Local Interconnect Network)-Transceiver umfasst, und der Steuereinheit, die beispielsweise einen Mikrocontroller umfasst, statt.

Ein Vorteil der erfindungsgemäßen Lösung liegt darin, dass die Trennung der beiden Teilnetze zwischen dem Senderempfänger einerseits und der Steuereinheit andrerseits erfolgt, denn dort sind vergleichsweise wenige Leitungen zu trennen sind. Beispielsweise sind zwischen einem LIN-Transceiver und einem Mikrocontroller in der Regel lediglich vier Signalpfade angeordnet. Zur Erzielung der Fehlerstromfestigkeit ist also ein vergleichsweise geringer Aufwand notwendig.

Zudem sind zwischen dem Senderempfänger und der Steuereinheit in der Regel lediglich Steuersignalpfade zu trennen, bei denen die Linearität der Signalübertragung weniger kritisch ist als beispielsweise bei Messleitungen zur Übertragung von analogen Messsignalen. Auch deswegen ist der Aufwand zur Erzielung der Fehlerstromfestigkeit vergleichsweise gering.

Bei dem ersten Teilnetz handelt es sich beispielsweise um ein 12 V-Bordnetz und bei dem zweiten Teilnetz um ein 48 V-Bordnetz. Das erste Teilnetz wird dabei mit der ersten Betriebsspannung von 12 V betrieben und das zweite Teilnetz wird mit der zweiten Betriebsspannung von 48 V betrieben. Beide Teilnetze des erfindungsgemäßen Mehrspannungsbordnetzes weisen einen jeweiligen Masseanschluss auf. Sowohl der erste Masseanschluss des ersten Teilnetzes als auch der von dem ersten Masseanschluss räumlich getrennt angeordnete zweite Masseanschluss des zweiten Teilnetzes sind auf dieselbe Masse, in der Regel die Fahrzeugmasse, geschaltet. Der erste Massenanschluss liegt beispielsweise in Gestalt eines ersten Massebolzens vor und der der zweite Masseanschluss in Gestalt eines zweiten Massebolzens, wobei der zweite Massebolzen räumlich getrennt von dem ersten Massebolzen angeordnet ist. Die Zusammenführung des ersten und des zweiten Masseanschlusses auf die gemeinsame Fahrzeugmasse erfolgt bevorzugt außerhalb des ersten Schaltungsmoduls oder außerhalb einer Komponente, in welchem die Steuereinheit und der Senderempfänger angeordnet sein können.

Dadurch, dass der erste Steuersignalpfad über das erste Schaltungsmodul sowohl auf einen der beiden Masseanschlüsse geschaltet ist als auch mit wenigstens einer der beiden Betriebsspannungen beaufschlagt ist, ist das erste Schaltungsmodul in der Lage, auf eine fehlerhafte Betriebsspannungsversorgung in dem ersten und/oder zweiten Teilnetz zu reagieren. In Reaktion auf eine solche fehlerhafte Betriebsspannungsversorgung nimmt das erste Schaltungsmodul einen sperrenden Zustand ein, bei dem die Signalübertragung von dem ersten Signalausgang zu dem ersten Signaleingang unterbunden wird. Insbesondere vermeidet das erste Schaltungsmodul dabei auch das Entstehen eines über den zugelassenen Maximalwert liegenden Fehlerstroms in dem ersten Steuersignalpfad.

Das erste Schaltungsmodul ist wahlweise unmittelbar mit der ersten und/oder zweiten Betriebsspannung beaufschlagt oder alternativ mittels eines oder mehrerer Spannungsumsetzer(s). Das erste Schaltungsmodul kann also auch mit einer gewandelten ersten und/oder gewandelten zweiten Betriebsspannung beaufschlagt sein.

Bei dem ersten Steuersignalpfad, der das erste Schaltungsmodul umfasst, handelt es sich bevorzugt um einen unidirektionalen Steuersignalpfad, der ausgebildet ist, einen Signalfluss in eine Richtung zuzulassen und in die entgegengesetzte Richtung zu unterbinden. Üblicherweise werden für die Kopplung eines LIN-Transceivers an einem Mikrocontroller derartige unidirektionale Steuersignalpfade eingesetzt. Auf dem ersten Steuersignalpfad können nicht nur Steuersignale im engeren Sinne übertragen werden, sondern beispielsweise auch digitalisierte Messsignale und/oder Datensignal. Das erste Steuersignal kann also beispielsweise in Gestalt eines Messsignals, eines Datensignals und/oder in Gestalt eines Ansteuersignals vorliegen. Bevorzugt stellt der Senderempfänger das erste Steuersignal als digitales Signal bereit.

Beispielsweise koppelt der erste Steuersignalpfad den ersten Signalausgang galvanisch auf den ersten Signaleingang. Es ist demnach bevorzugt, dass keine galvanische Trennung zwischen dem Senderempfänger und der Steuereinheit vorgesehen ist.

Nachfolgend werden weitere Ausführungsformen des erfindungsgemäßen Mehrspannungsbordnetzes beschrieben. Die Merkmale dieser weiteren Ausführungsformen können miteinander und/oder mit den oben bereits genannten optionalen Merkmalen zur Bildung weiterer Varianten kombiniert werden, sofern sie nicht ausdrücklich als alternativ zueinander beschrieben sind.

Bei einer ersten Ausführungsform des Mehrspannungsbordnetzes umfasst das erste Schaltungsmodul einen Transistor mit einem ersten Signalanschluss und einem ersten Steueranschluss, wobei der erste Signalanschluss auf den ersten oder zweiten Masseanschluss geschaltet ist und wobei der erste Steueranschluss auf den ersten Signalausgang geschaltet ist. Durch Bereitstellen des ersten Steuersignals am ersten Signalausgang steuert der Senderempfänger demnach den ersten Transistor. Die Signalübertragung von dem Senderempfänger zur Steuereinheit erfolgt über den ersten Transistor. Der Transistor ist ausgebildet, im Falle einer fehlerhaften Betriebsspannungsversorgung einen sperrenden Zustand einzunehmen, bei dem keine Signalübertragung vom Senderempfänger zur Steuereinheit erfolgt, insbesondere auch ein dort fließender Strom einen vorgegebenen Maximalwert nicht überschreitet.

Beispielsweise handelt es sich bei dem ersten Transistor um einen stromgesteuerten Transistor, bei dem der erste Signalanschluss durch einen Emitter-Anschluss gebildet ist, der auf den ersten Masseanschluss geschaltet ist, beispielsweise direkt oder über einen Widerstand. Bei dem ersten Steueranschluss handelt es sich in dieser Variante um einen Basisanschluss, der durch das von dem Senderempfänger bereitgestellte erste Steuersignal gesteuert wird. Beispielsweise ist der erste Transistor ein NPN-BipolarTransistor.

Ferner umfasst das erste Schaltungsmodul bevorzugt einen zweiten Transistor, der zum Übertragen des ersten Steuersignals zum ersten Signaleingang an den ersten Transistor gekoppelt ist und einerseits mit der zweiten Betriebsspannung beaufschlagt ist und andererseits auf den zweiten Masseanschluss sowie auf den ersten Signaleingang geschaltet ist. Im Normalfall, bei dem keine fehlerhafte Betriebsspannungsversorgung vorliegt, erfolgt also die Übertragung des ersten Steuersignals vom ersten Signalausgang des Senderempfängers zum ersten Signaleingang der Steuereinheit über den ersten Transistor und den zweiten Transistor. Bei beiden Transistoren handelt es sich bevorzugt um stromgesteuerte Transistoren, wie beispielsweise Bipolartransistoren. Der erste Transistor ist beispielsweise ein NPN-Bipolartransistor und der zweite Transistor ein PNP-Bipolartransistor. Im Normalfall erfolgt eine Übertragung des ersten Steuersignals über diese beiden Transistoren. Dadurch, dass der erste Transistor auf den ersten Masseanschluss geschaltet ist und der zweite Transistor mit der zweiten Betriebsspannung beaufschlagt ist und auf den zweiten Masseanschluss geschaltet ist, führt eine fehlerhafte Betriebsspannungsversorgung in dem ersten Teilnetz und/oder in dem zweiten Teilnetz im ersten Steuersignalpfad zu einem sperrenden Zustand, bei dem keine Übertragung des ersten Steuersignals mehr erfolgt und insbesondere ein etwaiger Fehlerstrom in diesem ersten Steuersignalpfad ein vorgegebenes Maximum nicht überschreitet.

Bei einer Variante handelt es sich bei dem ersten Transistor um einen Feldeffekttransistor, der einen zweiten Signalanschluss aufweist, wobei der erste Signalanschluss ein Gate-Anschluss ist, der auf den ersten Masseanschluss geschaltet ist, und der zweite Signalanschluss ein Source-Anschluss ist, der auf dem ersten Signaleingang der Steuereinheit geschaltet ist, und wobei der erste Steueranschluss, der auf den ersten Signalausgang des Senderempfängers geschaltet ist, ein Drain-Anschluss ist. Kommt es zu einer fehlerhaften Betriebsspannungsversorgung im Mehrspannungsbordnetz, sperrt der Feldeffekttransistor, da zwischen dem Gate-Anschluss und dem Source-Anschluss kein Potentialunterschied mehr vorliegt. Es fließt allenfalls noch ein Leckstrom, der in der Regel jedoch weit unterhalb eines erlaubten maximalen Fehlerstrom von beispielsweise 200 nA liegt. Bevorzugt handelt es sich bei dem Feldeffekttransistor um einen P-Kanal-MOSFET (Metal Oxide Semiconductor Field Effect Transistor).

Bei einer weiteren bevorzugten Ausführungsform umfasst das erste Schaltungsmodul eine erste Diode, die einen Anoden-Anschluss sowie einen Katoden-Anschluss aufweist, wobei der erste Signalausgang des Senderempfängers auf den Anoden-Anschluss geschaltet ist, und wobei der Katoden-Anschluss auf den ersten Signaleingang der Steuereinheit sowie über einen Widerstand auf den zweiten Masseanschluss geschaltet ist. Die erste Diode verhindert ein Durchschlagen von der Spannungsebene des zweiten Teilnetzes auf die Spannungsebene des ersten Teilnetzes. Der erste Steuersignalpfad wird also durch die erste Diode aufgetrennt. Im Normalfall überträgt die erste Diode das erste Steuersignal vom Senderempfänger zur Steuereinheit, also von dem ersten Signalausgang zu dem ersten Signaleingang. Kommt es im zweiten Teilnetz zu einem Masseverlust, so kommt es am zweiten Masseanschluss zu einem Potentialanstieg, der sich auch am Kathodenanschluss der ersten Diode wiederspiegelt. Dadurch wird die erste Diode in einen sperrenden Zustand versetzt, bei dem keine Übertragung des ersten Steuersignals vom Senderempfänger zu der Steuereinheit erfolgt.

Bei einer weiteren Ausführungsform des Mehrspannungsbordnetzes umfasst das erste Schaltungsmodul einen Kondensator, der einen ersten Elektrodenanschluss und einen zweiten Elektrodenanschluss aufweist, wobei der erste Signalausgang auf den ersten Elektrodenanschluss und der erste Signaleingang auf den zweiten Elektrodenanschluss geschaltet sind. Diese Variante eignet sich insbesondere dann, wenn es sich bei dem ersten Steuersignal um ein Wechselsignal handelt, also um ein Signal, dessen Pegel sich mit einer bestimmten Frequenz, wie 20 kHz, ändert. Beispielsweise eignet sich diese Variante, falls es sich bei dem ersten Steuersignalpfad um eine Datensignalleitung zwischen dem Senderempfänger und der Steuereinheit handelt. Auch der Kondensator führt keine galvanische Trennung der beiden Teilnetze herbei, da diese über ihre Masseanschlüsse mit derselben Masse verbunden sind. Aufgrund der kapazitiven Kopplung durch den Kondensator sind im ersten Steuersignal steile Flanken möglich, ohne dass es dabei zu einer Funktionsstörung kommt. Diese Ausführungsform zeichnet sich durch einen äußerst geringen Schaltungsaufwand sowie durch eine hohe Robustheit aus.

Bevorzugt sind bei der Ausführungsform mit dem Kondensator zwei Pull-Up-Widerstände vorgesehen, von denen ein erster am ersten Elektrodenanschluss angekoppelt ist und mit der ersten Betriebsspannung beaufschlagt ist, und von denen ein zweiter mit der zweiten Betriebsspannung beaufschlagt ist und an den zweiten Elektrodenanschluss gekoppelt ist. Ferner ist der zweite Elektrodenanschluss des Kondensators bevorzugt über eine in Sperrrichtung angeordnete zweite Diode auf den zweiten Masseanschluss geschaltet. Durch Dimensionierung des zweiten Pull-Up-Widerstands und des Kondensators wird festgelegt, wie sich ein Pegelwechsel des ersten Steuersignals am ersten Signalausgang am ersten Signaleingang der Steuereinheit auswirkt. Weiter unten wird ein Beispiel für eine solche Dimensionierung vorgestellt. Die zweite Diode ermöglicht sowohl einen schnellen Pegelwechsel im ersten Steuersignalpfad als auch einen dauerhaften High-Pegel.

Oben wurde bisher ein Steuersignalpfad beschrieben, der ausgebildet ist, das erste Steuersignal vom Senderempfänger der ersten Teilnetzes zur Steuereinheit des zweiten Teilnetzes zu übertragen. Häufig sollen auch Steuersignale von der Steuereinheit zum Senderempfänger übertragen werden, wie im Folgenden erläutert ist.

Bei einer weiteren bevorzugten Ausführungsform des Mehrspannungsbordnetzes ist die Steuereinheit ausgebildet, ein zweites Steuersignal bereitzustellen. Ferner umfasst das Mehrspannungsbordnetz in dieser Ausführungsform einen zweiten Steuersignalpfad, der einen zweiten Signalausgang der Steuereinheit an einen zweiten Signaleingang des Senderempfängers koppelt, und der ausgebildet und angeordnet ist, das zweite Steuersignal von dem zweiten Signalausgang an den zweiten Signaleingang zu übertragen. Der zweite Steuersignalpfad umfasst ein zweites Schaltungsmodul, über das der zweite Steuersignalpfad einerseits auf den ersten Masseanschluss und/oder den zweiten Masseanschluss geschaltet ist und andererseits mit der ersten Betriebsspannung und/oder mit der zweiten Betriebsspannung beaufschlagt ist. Das zweite Schaltungsmodul ist ausgebildet, einen sperrenden Zustand einzunehmen, bei dem die Übertragung des zweiten Steuersignals von dem zweiten Signalausgang zu dem zweiten Signaleingang unterbunden wird, falls im ersten Teilnetz und/oder im zweiten Teilnetz eine fehlerhafte Betriebsspannungsversorgung vorliegt.

Das zweite Schaltungsmodul kann in ähnlicher Weise implementiert sein wie das erste Schaltungsmodul. Beispielsweise umfasst das zweite Schaltungsmodul eine Anzahl von stromgesteuerten Transistoren, was mit Bezug auf die Ausführungsbeispiele weiter unten genauer erläutert ist.

Bei einer Ausführungsform des Mehrspannungsbordnetzes sind der Senderempfänger und die Steuereinheit über eine Anzahl von ersten Steuersignalpfaden und eine Anzahl von zweiten Steuersignalpfaden aneinander gekoppelt. Jeder erster Steuersignalpfad, also jeder Steuersignalpfad, der die Signalübertragung vom Senderempfänger zur Steuereinheit ermöglicht, umfasst bevorzugt ein jeweiliges erstes Schaltungsmodul, wobei die ersten Schaltungsmodule unterschiedlich implementiert sein können. Beispielsweise umfasst ein erstes Schaltungsmodul besagten ersten Kondensator, und ein weiteres erstes Schaltungsmodul die besagte erste Diode oder besagten ersten Transistor in Gestalt des spannungsgesteuerten Transistors. Jeder zweiter Steuersignalpfad, also jeder Steuersignalpfad, der die Signalübertragung von der Steuereinheit zum Senderempfänger ermöglicht, umfasst bevorzugt ein jeweiliges zweites Schaltungsmodul, wobei auch die zweiten Schaltungsmodule unterschiedlich implementiert sein können. Beispielsweise umfasst wenigstens eines der zweiten Schaltungsmodule eine Anzahl von stromgesteuerten Transistoren. Die Schaltungsmodule der Steuersignalpfade können also in Abhängigkeit der Signalrichtung und/oder in Abhängigkeit des Typs des zu übertragenden Signals unterschiedlich implementiert sein.

Bei Signalwechseln auf dem ersten Steuersignalpfad kann es zu Ausgleichsströmen kommen, die über das Mehrspannungsbordnetz fließen. Daher umfasst das erste Schaltungsmodul bei einer weiteren bevorzugten Ausführungsform einen Ausgleichskondensator, der einen ersten Elektrodenanschluss und einen zweiten Elektrodenanschluss aufweist, wobei der erste Elektrodenanschluss auf den ersten Masseanschluss und der zweite Elektrodenanschluss auf den zweiten Masseanschluss geschaltet ist. Dadurch, dass zwischen dem ersten Masseanschluss und dem zweiten Masseanschluss der Ausgleichskondensator vorgesehen ist, werden die elektromagnetische Verträglichkeit (EMV), insbesondere die leitungsgebundene EMV, verbessert und Störungen auf Leitungen reduziert. Der Ausgleichskondensator ist ausgebildet, kurzzeitige Ausgleichsströme zu kompensieren, so dass diese nicht über das Mehrspannungsbordnetz fließen, sondern lediglich in einer Komponente, die die Steuereinheit, den Senderempfänger und das erste Schaltungsmodul umfasst. Der Ausgleichskondensator ist insbesondere von Vorteil, wenn das erste Schaltungsmodul besagten Kondensator aufweist. Er eignet sich aber auch bei den anderen Varianten des ersten Schaltungsmoduls zur Verbesserung der EMV und Reduzierung von Störungen.

Wie bereits oben erwähnt, handelt es sich bei dem Senderempfänger bevorzugt um einen LIN-Transceiver, der bei einer Betriebsspannung von 12 V betrieben wird. Bei der Steuereinheit des zweiten Teilnetzes handelt es sich bevorzugt um einen Mikrocontroller, der bei einer Betriebsspannung von 5 V betrieben wird.

Gemäß einem zweiten Aspekt der vorliegenden Erfindung werden die oben genannten Aufgaben gelöst durch ein Schaltungsmodul gemäß dem unabhängigen Anspruch 15. Das erfindungsgemäße Schaltungsmodul des zweiten Aspektes der Erfindung teilt die oben genannten Vorteile des ersten Aspektes der Erfindung. Bevorzugte Ausführungsformen des Schaltungsmoduls entsprechen sinngemäß den oben genannten Ausführungsformen, insbesondere, wie sie in den abhängigen Ansprüchen angegeben sind.

Weitere Merkmale und Vorteile der Erfindung werden bei der nachfolgenden Beschreibung von Ausführungsbeispielen anhand der Figuren deutlich.

Es zeigen:
- Fig. 1: eine schematische und exemplarische Teilansicht einer Ausführungsform eines erfindungsgemäßen Mehrspannungsbordnetzes;
- Fig. 2: eine schematische und exemplarische Darstellung einer ersten Ausgestaltungsvariante eines ersten Schaltungsmoduls zum Trennen von Teilnetzen eines Mehrspannungsbordnetzes;
- Fig. 3: eine schematische und exemplarische Darstellung einer zweiten Ausgestaltungsvariante des ersten Schaltungsmoduls;
- Fig. 4: eine schematische und exemplarische Darstellung einer dritten Ausgestaltungsvariante des ersten Schaltungsmoduls;
- Fig. 5: eine schematische und exemplarische Darstellung einer vierten Ausgestaltungsvariante des ersten Schaltungsmoduls; und
- Fig. 6: eine schematische und exemplarische Darstellung einer fünften Ausgestaltungsvariante des ersten Schaltungsmoduls.

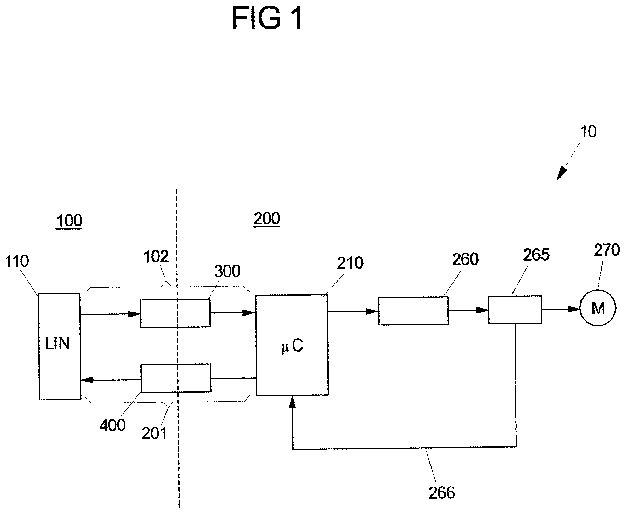

Fig. 1 zeigt exemplarisch und schematisch einen Aufbau eines erfindungsgemäßen Mehrspannungsbordnetzes 10 für ein Fahrzeug. Das Mehrspannungsbordnetz 10 umfasst ein erstes Teilnetz 100 und ein zweites Teilnetz 200. Das erste Teilnetz 100 wird bei einer ersten Betriebsspannung betrieben und das zweite Teilnetz 200 bei einer zweiten Betriebsspannung. Die erste Betriebsspannung beträgt beispielsweise 12 V und die zweite Betriebsspannung beispielsweise 48 V.

Das zweite Teilnetz 200 umfasst eine Steuereinheit 210, beispielsweise einen Mikrocontroller (µC). Die Steuereinheit 210 sendet Ansteuersignale an einen Treiber 260 des Mehrspannungsbordnetzes 10. Der Treiber 260 schaltet einen oder mehrere leistungselektronische Schalter 265. Dadurch kann ein Motor 270 (M) mit einer gestellten Spannung und/oder mit einem gestellten Strom angesteuert werden. Über eine Messleitung 266 sind der Steuereinheit 210 Messsignale zugeführt. In Abhängigkeit dieser Messsignale steuert die Steuereinheit 210 den Treiber 260.

Das erste Teilnetz 100 weist einen Senderempfänger 110 auf, beispielsweise in Gestalt eines LIN-Transceivers oder LIN-Masters.

Der Senderempfänger 110 und die Steuereinheit 210 sind kommunikativ über einen ersten Steuersignalpfad 102 und einen zweiten Steuersignalpfad 201 aneinander gekoppelt. Über den ersten Steuersignalpfad 102 führt der Senderempfänger 110 der Steuereinheit 210 ein erstes Steuersignal zu und über den zweiten Steuersignalpfad 201 führt die Steuereinheit 210 dem Senderempfänger 110 ein zweites Steuersignal zu. Bei beiden Steuersignalpfaden 102 und 201 handelt es sich also um unidirektionale Steuersignalpfade, die einen Signalfluss lediglich in eine Richtung erlauben. Neben diesem ersten Steuersignalpfad 102 und dem zweiten Steuersignalpfad 201 können zur Kopplung des Senderempfängers 110 an die Steuereinheit 210 weitere Steuersignalpfade vorgesehen sein.

Zur Vermeidung von Fehlerströmen im ersten Steuersignalpfad 102 und im zweiten Steuersignalpfad 201, die durch eine fehlerhafte Betriebsspannungsversorgung in dem ersten Teilnetz 100 und/oder in dem zweiten Teilnetz 200 hervorgerufen werden können, sind erfindungsgemäß im ersten Steuersignalpfad 102 ein erstes Schaltungsmodul 300 und im zweiten Steuersignalpfad 201 ein zweites Schaltungsmodul 400 vorgesehen.

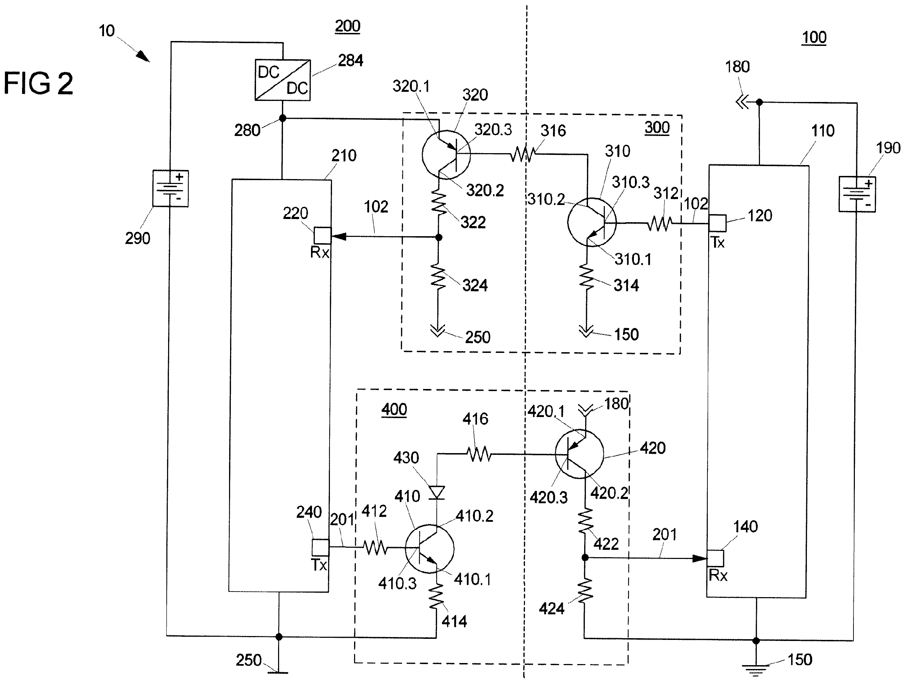

Die fehlerhafte Betriebsspannungsversorgung liegt beispielsweise dann vor, wenn der Senderempfänger 110 oder die Steuereinheit 210 nicht mehr auf Masse geschaltet ist. Ein solcher Vorfall wird auch als Masseabriss oder Masseverlust bezeichnet. Ferner liegt eine fehlerhafte Betriebsspannungsversorgung vor, wenn im ersten Teilnetz 100 und/oder im zweiten Teilnetz 200 ein Kurzschluss entstanden ist, und/oder ein Potentialunterschied zwischen einem ersten Masseanschluss 150 (s. Fig. 2 bis 6) und einem zweiten Masseanschluss 250 (s. Fig. 2 bis 6) einen Schwellenwert, wie beispielsweise +/- 1 V überschreitet. Ein aufgrund einer solchen fehlerhaften Betriebsspannungsversorgung entstehender Fehlerstrom darf gemäß einem Anforderungskatalog einen bestimmten Maximalwert, wie beispielsweise einige Mikro-Ampere, nicht überschreiten. Für eine solche Strombegrenzung sind das erste Schaltungsmodul 300, das der erste Steuersignalpfad 102 erfindungsgemäß umfasst, und das zweite Schaltungsmodul 300, das der zweite Steuersignalpfad 201 erfindungsgemäß umfasst, geeignet.

Sowohl das erste Schaltungsmodul 300 als auch das zweite Schaltungsmodul 400 sind dazu ausgebildet, Steuersignale zu übertragen. Genauer gesagt, ist das erste Schaltungsmodul 300 ausgebildet, ein erstes Steuersignal, das von dem Senderempfänger 110 an einem ersten Signalausgang 120 (s. Fig. 2 bis 6) bereitgestellt wird, an einen ersten Signaleingang 220 (s. Fig. 2 bis 6) der Steuereinheit 210 zu übertragen. Ebenso ist das zweite Schaltungsmodul 400 ausgebildet, ein zweites Steuersignal, das die Steuereinheit 210 an einem zweiten Signalausgang 240 (s. Fig. 2 bis 6) bereitstellt, einem zweiten Signaleingang 140 (s. Fig. 2 bis 6) des Senderempfängers 110 bereitzustellen.

In unmittelbarer Reaktion auf eine fehlerhafte Betriebsspannungsversorgung im ersten Teilnetz 100 und/oder im zweiten Teilnetz 200 nehmen das erste Schaltungsmodul 300 und das zweite Schaltungsmodul 400 jeweils einen sperrenden Zustand ein, bei dem die Übertragung des ersten Steuersignals von dem ersten Signalausgang 120 zu dem ersten Signaleingang 220 und die Übertragung des zweiten Steuersignals von dem zweiten Signalausgang 240 zu dem zweiten Signaleingang 140 unterbunden werden.

Erfindungsgemäß erfolgt also eine Trennung der beiden Teilnetze 100 und 200 zwischen dem Senderempfänger 110 und der Steuereinheit 210. Die gestrichelte vertikale Linie zwischen dem ersten Teilnetz 100 und dem zweiten Teilnetz 200 markiert in den Fig. 1 bis 6 diese Trennung der beiden Teilnetze 100 und 200.

Ein Vorteil des Mehrspannungsbordnetzes 10 liegt darin, dass die Trennung der beiden Teilnetze 100 und 200 zwischen dem Senderempfänger 110 einerseits und der Steuereinheit 210 andererseits erfolgt. Dort sind vergleichsweise wenige Leitungen zu trennen. Zur Erzielung der Fehlerstromfestigkeit ist also ein vergleichsweise geringer Aufwand notwendig. Zudem sind zwischen den beiden Steuereinheiten in der Regel lediglich Steuersignalleitungen zu trennen, bei denen die Linearität der Signalübertragung weniger kritisch ist. Beispielsweise wird eine Trennung der Messleitung 266 vermieden. Dort wäre die Linearität zur korrekten Erfassung von Messsignalen notwendig.

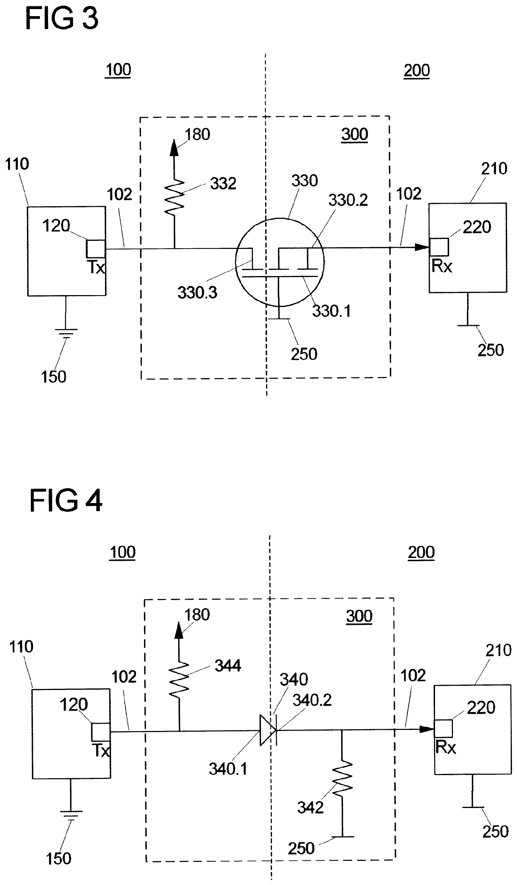

Mit Bezug auf die Fig. 2 wird nun die Anordnung des Senderempfängers 110 in dem ersten Teilnetz 100 und die Anordnung der Steuereinheit 210 in dem zweiten Teilnetz 200 näher erläutert. Diese Erläuterungen gelten auch für die Ausgestaltungsvarianten gemäß den Fig. 3 bis 6.

Die erste Betriebsspannung von beispielsweise 12 V wird von einer ersten Energieversorgungseinheit 190, wie beispielsweise eine Batterie, bereitgestellt. Die zweite Betriebsspannung wird von einer zweiten Energieversorgungseinheit 290, beispielsweise ebenfalls in Gestalt einer Batterie, bereitgestellt. Die zweite Betriebsspannung liegt z.B. bei 48 V.

Im ersten Teilnetz 100 sind zur Bereitstellung der ersten Betriebsspannung mehrere erste Betriebsspannungsanschlüsse 180 vorgesehen. Analog dazu ist im zweiten Teilnetz 200 zur Bereitstellung der (gewandelten) zweiten Betriebsspannung eine Anzahl von zweiten Betriebsspannungsanschlüssen 280 vorgesehen.

Das erste Teilnetz 100 weist mehrere erste Masseanschlüsse 150 auf, über die Komponenten des ersten Teilnetzes 100 an Masse angeschlossen sind. Ebenso weist das zweite Teilnetz 200 mehrere zweite Masseanschlüsse 250 auf, über die Komponenten des zweiten Teilnetzes 200 an Masse angeschlossen sind. Bei den Masseanschlüssen 150 und 250 handelt es sich beispielsweise um räumlich voneinander getrennte Massebolzen, die an der Fahrzeugkarosserie angeschlossen sind. Im Ergebnis sind sowohl die ersten Masseanschlüsse 150 als auch die zweiten Masseanschlüsse 250 mit derselben Masse, üblicherweise der Masse des Fahrzeuges, verbunden. Dies entspricht einer sternförmigen Verschaltung der ersten und zweiten Masseanschlüsse 150, 250 auf die Masse des Fahrzeuges. Die Zusammenführung der Masseanschlüsse 150 und 250 auf die gemeinsame Fahrzeugmasse erfolgt außerhalb der Schaltungsmodule 300 und 400 und ggf. außerhalb einer Komponente, in der die Steuereinheit 210 und der Senderempfänger 110 angeordnet sind.

Das erste Teilnetz 100 weist den Senderempfänger 110 auf, der an dem ersten Masseanschluss 150 und an dem ersten Betriebsspannungsanschluss 180 angeschlossen ist. Der Senderempfänger 110 ist beispielsweise ein LIN-Transceiver.

Das zweite Teilnetz 200 umfasst die Steuereinheit 210, beispielsweise einen Mikrocontroller. Die Steuereinheit 210 ist auf einen zweiten Masseanschluss 250 geschaltet. Mittels eines Spannungsumsetzers 284 in Gestalt eines DC/DC-Wandlers ist der Steuereinheit 210 die zweite Betriebsspannung zugeführt. Beispielsweise handelt es sich bei dem DC/DC-Wandler 284 um einen Wandler, der eine Eingangsspannung von 48 V in eine Ausgangsspannung von 5 V wandelt und der Steuereinheit 210 diese 5 V zur Verfügung stellt. Anstelle des DC/DC-Wandlers kann auch ein Linearregler oder ein anderer Spannungsumsetzer vorgesehen sein.

Über das erste Schaltungsmodul 300 ist der erste Steuersignalpfad 102 sowohl auf den ersten Masseanschluss 150 als auch auf den zweiten Masseanschluss 250 geschaltet. Gleiches gilt für das zweite Schaltungsmodul 400, über das der zweite Steuersignalpfad 201 sowohl auf den ersten Masseanschluss 150 als auch auf den zweiten Masseanschluss 250 geschaltet ist.

Nachfolgend werden mit Bezug auf die Fig. 2 bis 6 konkrete Ausgestaltungsvarianten des ersten Schaltungsmoduls 300 und des zweiten Schaltungsmoduls 400 vorgestellt. Die Schaltungsmodule 300 und 400 dienen jeweils der Trennung der Teilnetze 100 und 200 im Falle einer fehlerhaften Betriebsspannungsversorgung.

Die erste Ausgestaltungsvariante des ersten Schaltungsmoduls 300 gemäß der Fig. 2 basiert auf der Verwendung von zwei stromgesteuerten Transistoren, den Bipolartransistoren 310 und 320. Der erste Bipolartransistor 310 ist ein NPN-BipolarTransistor, dessen Basis-Anschluss 310.3 über einen Widerstand 312 auf den ersten Signalausgang 120 (Tx) des Senderempfängers 110 geschaltet ist. Ein erster Emitteranschluss 310.1 des ersten Transistors 310 ist über einen weiteren Widerstand 314 auf den ersten Masseanschluss 150 geschaltet. Über einen weiteren Widerstand 316 ist ein Kollektor-Anschluss 310.2 des ersten Transistors 310 auf einen Basis-Anschluss 320.3 eines zweiten Transistors 320 geschaltet. Bei diesem zweiten Transistor 320 handelt es sich um einen PNP-Bipolartransistor. Dessen Emitter-Anschluss 320.1 ist auf den zweiten Betriebsspannungsanschluss 280 geschaltet, also auf einen Ausgang des DC/DC Wandlers 284. Über zwei weitere Widerstände 322 und 324 ist ein Kollektor-Anschluss 320.2 des zweiten Transistors 320 auf den zweiten Masseanschluss 250 geschaltet. Zwischen den beiden Widerständen 322 und 324 ist ein Anschluss vorgesehen, der dem ersten Signaleingang 220 (Rx) der Steuereinheit 210 zugeführt ist.

Bei dem zweiten Transistor 320 handelt es sich bevorzugt um einen analogen Transistor, der eine Spannungsfestigkeit von 70 V aufweist. Der erste Transistor 310 kann entweder anlog oder digital (d.h. mit integriertem Vorwiderstand) ausgeführt sein.

Kommt es zu einer fehlerhaften Betriebsspannungsversorgung im ersten Teilnetz 100 und/oder im zweiten Teilnetz 200, so nimmt das erste Schaltungsmodul 300 durch die beiden Transistoren 310 und 320 einen sperrenden Zustand ein, bei dem im ersten Signalpfad 102 quasi kein Ausgleichsstrom fließt und somit weder der Senderempfänger 110 noch die Steuereinheit 210 von einem solchen Ausgleichsstrom beschädigt oder zerstört werden.

Das zweite Schaltungsmodul 400 ist ähnlich wie das erste Schaltungsmodul 300 aufgebaut. Es ist ausgebildet, das von der Steuereinheit 210 am zweiten Signalausgang 240 bereitgestellte Steuersignal dem zweiten Signaleingang 140 des Senderempfängers 110 zuzuführen. Dazu weist das zweite Schaltungsmodul 400 ebenfalls zwei Bipolartransistoren, nämlich einen dritten Bipolartransistor 410 in Gestalt eines NPN-Bipolartransistors und einen vierten Bipolartransistor 420 in Form eines PNP-Bipolartransistors. Der zweite Signalausgang 240 ist über einen Widerstand 412 dem Basis-Anschluss 410.3 des dritten Transistors 410 zugeführt. Über einen weiteren Widerstand 414 ist ein Emitter-Anschluss 410.1 des dritten Transistors 410 dem zweiten Masseanschluss 250 zugeführt. Ein Kollektor-Anschluss 410.2 des dritten Transistors 410 führt über eine dritte Diode 430 und einem weiteren Widerstand 416 zu einem Basis-Anschluss 420.3 des vierten Transistors 420.

Ein Emitter-Anschluss 420.1 des vierten Transistors 420 ist an den ersten Betriebsspannungsanschluss 180 angeschlossen. Das von der Steuereinheit 210 bereitgestellte Signal ist dem zweiten Signaleingang 140 des Senderempfängers 110 über einen Kollektor-Anschluss 420.2 des zweiten Transistors 420 und einem weiteren Widerstand 422 zugeführt. Der zweite Signaleingang 140 ist ferner über einen weiteren Widerstand 424 auf den ersten Masseanschluss 150 geschaltet.

Kommt es zu einer fehlerhaften Betriebsspannungsversorgung im ersten Teilnetz 100 und/oder im zweiten Teilnetz 200, so nimmt das zweite Schaltungsmodul 400 durch die beiden Transistoren 410 und 420 einen sperrenden Zustand ein, bei dem im zweiten Signalpfad 201 quasi kein Ausgleichsstrom fließt und somit weder der Senderempfänger 110 noch die Steuereinheit 210 von einem solchen Ausgleichsstrom beschädigt oder zerstört werden.

Fig. 3 zeigt in schematischer Art und Weise eine zweite Ausgestaltungsvariante für das erste Schaltungsmodul 300, das in dem ersten Steuersignalpfad 102 integriert ist. In der Fig. 3 ist, wie in den Fig. 4 bis Fig. 6 ebenfalls, der Senderempfänger 110 und die Steuereinheit 210 vereinfacht dargestellt.

Bei der zweiten Ausgestaltungsvariante des ersten Schaltungsmoduls 300 ist gemäß der Fig. 3 ein P-Kanal MOSFET vorgesehen, dessen Drain-Anschluss 330.3 dem ersten Signalausgang 120 zugeführt ist. Ein Gate-Anschluss 330.1 des MOSFETs 330 ist auf den zweiten Masseanschluss 250 geschaltet. Ein Source-Anschluss 330.2 ist dem ersten Signaleingang 220 zugeführt. Ferner ist ein Pull-Up-Widerstand 332 vorgesehen, über den der erste Signalausgang 120 und der Drain-Anschluss 330.3 an den ersten Betriebsspannungsanschluss 180 gekoppelt sind.

Das erste Steuersignal, das der Senderempfänger 110 am ersten Signalausgang 120 bereitstellt, wird von dem Schaltungsmodul 300 also über die Drain-Source-Verbindung dem ersten Signaleingang 220 der Steuereinheit 210 zugeführt. Weist das erste Steuersignal einen High-Pegel auf, schaltet der MOSFET 330 durch. Hat das Steuersignal einen Low-Pegel, so sperrt der MOSFET 330. Kommt es nun beispielsweise im zweiten Teilnetz 200 zu einer fehlerhaften Betriebsspannungsversorgung, so beträgt die Spannung zwischen dem Gate-Anschluss 330.1 und dem Source-Anschluss 320.2 etwa 0 V, so dass der MOSFET 330 sperrt und im Steuersignalpfad 102 quasi kein Fehlerstrom entsteht. Es entsteht allenfalls ein Leckstrom von einigen Nano-Ampere.

Diese Ausgestaltungsvariante des ersten Schaltungsmoduls 300 kann eingesetzt werden, wenn es sich bei dem ersten Steuersignal um ein Gleich- oder um ein Wechselsignal handelt. Das erste Steuersignal ist ein Wechselsignal, wenn es eine Frequenz von bspw. 20 kHz aufweist, die oberhalb einer Mindestfrequenz liegt. Beispielsweise handelt es sich bei dem ersten Steuersignal um ein Datensignal, das eine Bitfolge enthält. Das erste Steuersignal ist ein Gleichsignal, wenn sich sein Pegel nicht oder nur gelegentlich ändert. Das erste Steuersignal, das über das erste Schaltungsmodul 300 in dieser Ausgestaltungsvariante zu übertragen ist, kann steile Flanken aufweisen, ohne dass es dabei zu einer Funktionsbeeinträchtigung kommt. Diese Ausgestaltungsvariante zeichnet sich durch eine besonders einfache Dimensionierung sowie einen sehr geringen Schaltungsaufwand aus. Ferner ist sie robust gegen Störungen. Sie eignet sich insbesondere für die Übertragung von Steuersignalen des Senderempfängers 110 zur Steuereinheit 210, also insbesondere zur Übertragung von Signalen vom LIN-Transceiver zum Mikrocontroller.

Die Fig. 4 zeigt schematisch und exemplarisch eine dritte Ausgestaltungsvariante für das erste Schaltungsmodul 300. Dort ist im Steuersignalpfad 102 eine erste Diode 340 vorgesehen. Die erste Diode weist einen Anodenanschluss 340.1 und einen Katodenanschluss 340.2 auf, wobei der erste Signalausgang 120 auf den Anodenanschluss 340.1 geschaltet ist, und wobei der Katodenanschluss 340.2 auf den ersten Signaleingang 220 geschaltet ist sowie über einen Widerstand 342 auf den zweiten Masseanschluss 250.

Ferner ist ein Pull-Up-Widerstand 344 vorgesehen, über den der erste Signalausgang 120 und der Anodenanschluss 340.1 auf dem ersten Betriebsspannungsanschluss 180 geschaltet sind. Die erste Diode 340 leitet nur, solange das Potential am zweiten Masseanschluss 250 unterhalb der Spannung des ersten Teilnetzes 100 liegt. Kommt es im zweiten Teilnetz 200 zu einer fehlerhaften Betriebsspannungsversorgung, beispielsweise aufgrund eines Masseverlusts, steigt die Spannung am zweiten Masseanschluss 250 an und die erste Diode 340 nimmt einen Sperrzustand ein. Folglich fließen im ersten Steuersignalpfad 102 keine Ausgleichströme. Allenfalls ein niedriger Diodenleckstrom von einigen Nano-Ampere entsteht.

Die dritte Ausgestaltungsvariante gemäß der Fig. 4 ist sowohl zur Übertragung des ersten Steuersignals in Gestalt eines Gleichsignals oder in Gestalt eines Wechselsignals geeignet. Auch hier sind steile Flanken im ersten Steuersignal möglich, ohne dass es zu einer Funktionsbeeinträchtigung kommt. Die dritte Ausgestaltungsvariante des ersten Schaltungsmoduls 300 zeichnet sich durch eine einfache Dimensionierung, einen sehr geringen Schaltungsaufwand sowie Robustheit gegen Störungen auf. Insbesondere ist die dritte Ausgestaltungsvariante gemäß der Fig. 3 dazu geeignet, ein Steuersignal vom ersten Steuergerät 110 zum zweiten Steuergerät 220 zu übertragen, also vom LIN-Transceiver zum Mikrocontroller.

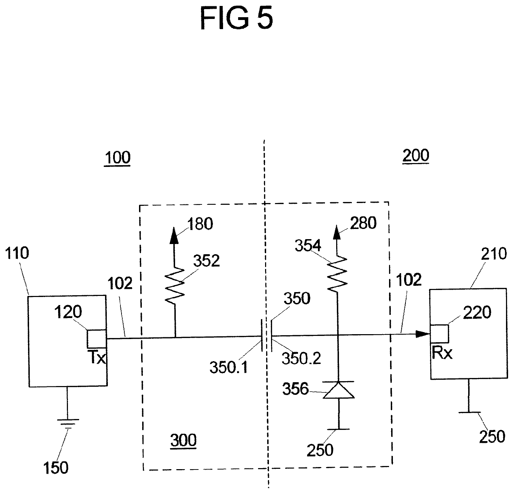

Die Fig. 5 zeigt eine vierte Ausgestaltungsvariante des ersten Schaltungsmoduls 300. Demgemäß ist ein Kondensator 350 vorgesehen. Der erste Signalausgang 120 ist auf einen ersten Elektrodenanschluss 350.1 des Kondensators 350 geschaltet. Ein zweiter Elektrodenanschluss 350.2 des Kondensators 350 ist auf den ersten Signaleingang 220 geschaltet. Ferner sind beide Elektrodenanschlüsse 350.1 und 350.2 über einen jeweiligen Pull-Up-Widerstand 352, 354 auf den ersten Betriebsspannungsanschluss 180 bzw. auf den zweiten Betriebsspannungsanschluss 280 geschaltet. Darüber hinaus ist eine zweite Diode 356 vorgesehen, die zwischen dem zweiten Masseanschluss 250 und dem zweiten Elektrodenanschluss 350.2 geschaltet ist und in Sperrrichtung angeordnet ist. Der Pull-Up-Widerstand 354 und die zweite Diode 356 auf Empfängerseite, sprich auf Seiten des zweiten Teilnetzes 200, sind vorgesehen, um einen schnellen Signalwechsel sowie einen dauerhaften High-Pegel zu ermöglichen.

Die vierte Ausgestaltungsvariante eignet sich insbesondere dann, wenn es sich bei dem ersten Steuersignal, das von dem ersten Steuergerät 110 zum zweiten Steuergerät 210 zu übertragen ist, um ein Wechselsignal handelt. Beispielsweise handelt es sich bei dem ersten Steuersignalpfad 102 in dieser Variante um eine Datensignalleitung, wie die im Zusammenhang mit dem LIN-Transceiver bekannte RXD- oder TXD-Leitung.

Der Pull-Up-Widerstand 352 weist beispielsweise einen Wert von 1 kΩ und der Kondensator 350 einen Wert von 150 nF auf. Die Dimensionierung des Pull-Up-Widerstands 354 richtet sich nach der Frequenz des ersten Steuersignals. Beispielsweise beträgt diese Frequenz etwa 20 kHz, wobei die Zeiten, in denen das Signal einen Low-Pegel aufweist, vergleichsweise kurz sind, beispielsweise einige hunderte Mikrosekunden, wie 676 µs. Der Low-Pegel des ersten Steuersignals beträgt beispielsweise maximal 0,5 V und der High-Pegel beispielsweise mindestens 4 V. Bei derartigen Werten ergibt sich beispielsweise ein Widerstandswert für den Pull-Up-Widerstand 354 von einigen 10 kΩ, wie beispielsweise 42,8 kΩ.

Wenn der Pegel des ersten Steuersignals, das der Senderempfänger 110 am ersten Signalausgang 120 bereitstellt, von einem High-Pegel auf einen Low-Pegel wechselt, kommt es am Kondensator 350 zum Ladungsausgleich und der Spannungshub an der Steuereinheit 210 entspricht dem Spannungshub am Senderempfänger 110. Der Spannungshub an der Steuereinheit 210 richtet sich dann nach dem Wert des Pull-Up-Widerstands 354 und dem Kapazitätswert des Kondensators 350.

Ändert sich der Signalpegel des von des Senderempfängers 110 bereitgestellten ersten Steuersignals von einem Low-Pegel auf einen High-Pegel, so wird ein Stromkreis über die zweite Diode 356 geschlossen und es kommt wiederum zum Ladungsausgleich am Kondensator 350. Auch hier entspricht der Spannungshub an der Steuereinheit 210 dem Spannungshub am Senderempfänger 110.

Der Vorteil der vierten Ausgestaltungsvariante des ersten Schaltungsmoduls 300 liegt zum einen in der durch den Kondensator 350 geschaffenen Sperrung für Gleichströme. Aufgrund der kapazitiven Kopplung sind auch steile Flanken im zu übertragenden ersten Steuersignal möglich. Ferner zeichnet sich auch die vierte Schaltungsvariante durch einen sehr geringen Schaltungsaufwand und damit auch durch eine hohe Robustheit gegenüber Störungen auf. Ferner ist ein DC-Masseversatz zwischen dem ersten Masseanschluss 150 und dem zweiten Masseanschluss 250 unkritisch, da das erste Steuersignal differentiell übertragen wird.

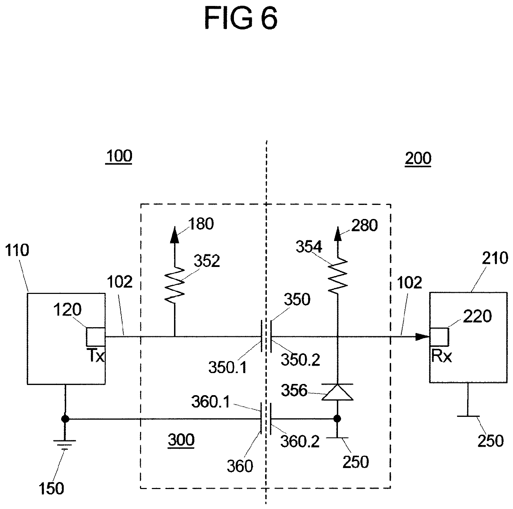

Die Variante des ersten Schaltungsmoduls 300 gemäß der Fig. 6 entspricht in wesentlichen Teilen der in Fig. 5 gezeigten Variante. Bei Signalwechseln auf dem ersten Steuersignalpfad 102 kann es dort allerdings zu Ausgleichsströmen kommen, die über das Mehrspannungsbordnetz 10 fließen. Zusätzlich umfasst das erste Schaltungsmodul 300 daher bei der Variante gemäß der Fig. 6 einen Ausgleichskondensator 360, der einen ersten Elektrodenanschluss 360.1 und einen zweiten Elektrodenanschluss 360.2 aufweist, wobei der erste Elektrodenanschluss 360.1 auf den ersten Masseanschluss 150 und der zweite Elektrodenanschluss 360.2 auf den zweiten Masseanschluss 250 geschaltet ist. Dadurch, dass zwischen dem ersten Masseanschluss 150 und dem zweiten Masseanschluss 250 der Ausgleichskondensator 360 vorgesehen ist, werden die elektromagnetische Verträglichkeit (EMV), insbesondere die leitungsgebundene EMV, verbessert und Störungen auf Leitungen des Mehrspannungsbordnetzes 10 reduziert. Der Ausgleichskondensator 360 kompensiert kurzzeitige Ausgleichsströme, so dass diese nicht über das Mehrspannungsbordnetz 10 fließen, sondern lediglich in einer Komponente, die die Steuereinheit 210, den Senderempfänger 110 und das erste Schaltungsmodul 300 umfasst. Der Ausgleichskondensators 360 ist insbesondere dann von Vorteil, wenn das erste Schaltungsmodul 300 besagten Kondensator 350 aufweist. Er eignet sich aber auch bei den anderen Varianten des ersten Schaltungsmoduls 300 zur Verbesserung der EMV.

Der Senderempfänger 110 und die Steuereinheit 210 sind beispielsweise jeweils in einem separaten Chip implementiert. Sowohl der Senderempfänger 110 und die Steuereinheit 210 können indes in einer gemeinsamen Komponente integriert sein. Der Senderempfänger 110 bildet beispielsweise einen Teil einer zweiten Steuereinheit des zweiten Teilnetzes.

Als Beispiele für das erste Teilnetz und das zweite Teilnetz sind das 12 V Bordnetz und das 48 V Bordnetz genannt worden. Die Erfindung ist aber keinesfalls auf diese beiden Bordnetze beschränkt, sondern eignet sich grundsätzlich für Mehrspannungsbordnetze aller Art.

### Bezugszeichenliste

- 10: Mehrspannungsbordnetz
- 100: Erstes Teilnetz
- 110: Senderempfänger
- 120: Erster Signalausgang
- 140: Zweiter Signaleingang
- 150: Erster Masseanschluss
- 180: Erster Betriebsspannungsanschluss
- 190: Erste Energieversorgungseinheit
- 102: Erster Steuersignalpfad
- 200: Zweites Teilnetz
- 201: Zweiter Steuersignalpfad
- 210: Steuereinheit
- 220: Erster Signaleingang
- 240: Zweiter Signalausgang
- 250: Zweiter Masseanschluss
- 260: Treiber
- 265: Anzahl von leistungselektronischen Schaltern
- 266: Messleitung
- 270: Motor
- 280: Zweiter Betriebsspannungsanschluss
- 284: Spannungsumsetzer
- 290: Zweite Energieversorgungseinheit
- 300: Erstes Schaltungsmodul
- 310: Erster Transistor
- 310.1 - 310.3: Emitter-, Kollektor- und Basis-Anschlüsse des ersten Transistors
- 312-316: Widerstände
- 320: Zweiter Transistor
- 320.1 - 320.3: Emitter-, Kollektor- und Basis-Anschlüsse des zweiten Transistors
- 322,324: Widerstände
- 330: Feldeffekttransistor
- 330.1 - 330.3: Gate-, Source- und Drain-Anschlüsse des Feldeffekttransistors
- 332: Pull-Up-Widerstand
- 340: Erste Diode
- 340.1, 340.2: Anoden- und Kathodenanschlüsse der ersten Diode 340
- 344: Pull-Up-Widerstand
- 342: Pull-Down-Widerstand
- 350: Kondensator
- 350.1, 350.2: Elektrodenanschlüsse des Kondensators
- 352, 354: Pull-Up-Widerstände
- 356: Zweite Diode
- 360: Ausgleichskondensator
- 360.1, 360.2: Elektrodenanschlüsse des Ausgleichskondensators
- 400: Zweites Schaltungsmodul
- 410: Dritter Transistor
- 410.1 - 410.3: Emitter-, Kollektor- und Basis-Anschlüsse des dritten Transistors
- 412, 414, 416: Widerstände
- 420: Vierter Transistor
- 420.1 - 420.3: Emitter-, Kollektor- und Basis-Anschlüsse des vierten Transistors
- 422, 424: Widerstände
- 430: Dritte Diode

## Patentansprüche

1. Mehrspannungsbordnetz (10) für ein Fahrzeug, aufweisend
- ein erstes Teilnetz (100), das ausgebildet ist, bei einer ersten Betriebsspannung (180) betrieben zu werden, und das einen Senderempfänger (110) umfasst, der über einen ersten Masseanschluss (150) auf Masse geschaltet ist, wobei der Senderempfänger (110) ausgebildet ist, ein erstes Steuersignal bereitzustellen;
- ein zweites Teilnetz (200), das ausgebildet ist, bei einer zweiten Betriebsspannung betrieben zu werden, und das eine Steuereinheit (210) umfasst, die über einen zweiten Masseanschluss (250) auf dieselbe Masse geschaltet ist; und
- einen ersten Steuersignalpfad (102), der einen ersten Signalausgang (120) des Senderempfängers (110) an einen ersten Signaleingang (220) der Steuereinheit (210) koppelt, und der ausgebildet und angeordnet ist, das erste Steuersignal vom ersten Signalausgang (120) an den ersten Signaleingang (220) zu übertragen;
**dadurch gekennzeichnet, dass**
der erste Steuersignalpfad (102) ein erstes Schaltungsmodul (300) umfasst, über das der erste Steuersignalpfad (102) einerseits auf den ersten Masseanschluss (150) und/oder den zweiten Masseanschluss (250) geschaltet ist und andererseits mit der ersten Betriebsspannung (180) und/oder mit der zweiten Betriebsspannung beaufschlagt ist, wobei das erste Schaltungsmodul (300) ausgebildet ist, einen sperrenden Zustand einzunehmen, bei dem die Übertragung des ersten Steuersignals von dem ersten Signalausgang (120) zu dem ersten Signaleingang (220) über den ersten Steuersignalpfad (102) unterbunden wird.

2. Mehrspannungsbordnetz (10) nach Anspruch 1, **dadurch gekennzeichnet, dass** das erste Schaltungsmodul (300) einen ersten Transistor (310; 330) mit einem ersten Signalanschluss (310.1; 330.1) und einem ersten Steueranschluss (310.3; 330.3) umfasst, wobei der erste Signalanschluss (310.1; 330.1) auf den ersten oder zweiten Masseanschluss (150; 250) geschaltet ist und wobei der erste Steueranschluss (310.3; 330.3) auf den ersten Signalausgang (120) geschaltet ist.

3. Mehrspannungsbordnetz (10) nach Anspruch 2, **dadurch gekennzeichnet, dass** der erste Transistor (310) ein stromgesteuerter Transistor ist, wobei der erste Signalanschluss (310.1) ein Emitter-Anschluss (310.1) des stromgesteuerten Transistors ist, der auf den ersten Masseanschluss (150) geschaltet ist, und wobei der erste Steueranschluss (310.3) ein Basis-Anschluss ist.

4. Mehrspannungsbordnetz (10) nach Anspruch 2 oder 3, **dadurch gekennzeichnet, dass** das erste Schaltungsmodul einen zweiten Transistor (320) umfasst, der zum Übertragen des ersten Steuersignals zum ersten Signaleingang (220) an den ersten Transistor (310) gekoppelt ist und einerseits mit der zweiten Betriebsspannung beaufschlagt ist und andererseits auf den zweiten Massenanschluss (250) sowie auf den ersten Signaleingang (220) geschaltet ist.

5. Mehrspannungsbordnetz (10) nach Anspruch 2, **dadurch gekennzeichnet, dass** der erste Transistor (330) ein Feldeffekt-Transistor ist, der einen zweiten Signalanschluss (330.2) aufweist, wobei der erste Signalanschluss (330.1) ein Gate-Anschluss ist, der zweite Signalanschluss (330.2) ein Source-Anschluss ist, der auf den ersten Signaleingang (220) geschaltet ist, und wobei der erste Steueranschluss (330.3) ein Drain-Anschluss ist.

6. Mehrspannungsbordnetz (10) nach Anspruch 1, **dadurch gekennzeichnet, dass** das erste Schaltungsmodul (300) eine erste Diode (340) umfasst, die einen Anodenanschluss (340.1) und einen Kathodenanschluss (340.2) aufweist, wobei der erste Signalausgang (120) auf den Anodenanschluss (340.1) geschaltet ist, und wobei der Kathodenanschluss (340.2) auf den ersten Signaleingang (220) sowie über einen Widerstand (342) auf den zweiten Masseanschluss (250) geschaltet ist.

7. Mehrspannungsbordnetz (10) nach Anspruch 1, **dadurch gekennzeichnet, dass** das erste Schaltungsmodul (300) einen Kondensator (350) umfasst, der einen ersten Elektrodenanschluss (350.1) und einen zweiten Elektrodenanschluss (350.2) aufweist, wobei
- der erste Signalausgang (120) auf den ersten Elektrodenanschluss (350.1) und der erste Signaleingang (220) auf den zweiten Elektrodenanschluss (350.2) geschaltet sind.

8. Mehrspannungsbordnetz (10) nach Anspruch 7, **dadurch gekennzeichnet, dass**
- der erste Elektrodenanschluss (350.1) über einen ersten Pull-Up-Widerstand (352) mit der ersten Betriebsspannung beaufschlagt ist; und
- der zweite Elektrodenanschluss (350.2) über einen zweiten Pull-Up-Widerstand (354) mit der zweiten Betriebsspannung beaufschlagt ist.

9. Mehrspannungsbordnetz (10) nach Anspruch 7 oder 8, **dadurch gekennzeichnet, dass** der zweite Elektrodenanschluss (350.2) über eine in Sperrrichtung angeordnete zweite Diode (356) auf den zweiten Masseanschluss (250) geschaltet ist.

10. Mehrspannungsbordnetz (10) nach einem der vorstehenden Ansprüche,
- die Steuereinheit (210) ausgebildet ist, ein zweites Steuersignal bereitzustellen;
- das Mehrspannungsbordnetz (10) einen zweiten Steuersignalpfad (201) aufweist, der einen zweiten Signalausgang (240) der Steuereinheit (210) an einen zweiten Signaleingang (140) des Senderempfängers (110) koppelt, und der ausgebildet und angeordnet ist, das zweite Steuersignal vom zweiten Signalausgang (240) an den zweiten Signaleingang (140) zu übertragen,
**dadurch gekennzeichnet, dass**
der zweite Steuersignalpfad (201) ein zweites Schaltungsmodul (400) umfasst, über das der zweite Steuersignalpfad (201) einerseits auf den ersten Masseanschluss (150) und/oder den zweiten Masseanschluss (250) geschaltet ist und andererseits mit der ersten Betriebsspannung (180) und/oder mit der zweiten Betriebsspannung beaufschlagt ist, wobei das zweite Schaltungsmodul (400) ausgebildet ist, einen sperrenden Zustand einzunehmen, bei dem die Übertragung des zweiten Steuersignals von dem zweiten Signalausgang (240) zu dem zweiten Signaleingang (140) unterbunden wird.

11. Mehrspannungsbordnetz (10) nach einem der vorstehenden Ansprüche, **dadurch gekennzeichnet, dass** der erste Steuersignalpfad (102) und/oder der zweite Steuersignalpfad (201) ein unidirektionaler Steuersignalpfad ist.

12. Mehrspannungsbordnetz (10) nach einem der vorstehenden Ansprüche, **dadurch gekennzeichnet, dass** der Senderempfänger (110) einen LIN-Transceiver umfasst, der ausgebildet ist, bei der ersten Betriebsspannung betrieben zu werden.

13. Mehrspannungsbordnetz (10) nach einem der vorstehenden Ansprüche, **dadurch gekennzeichnet, dass** die Steuereinheit (210) einen Mikrocontroller aufweist, der ausgebildet ist, bei einer von einem Spannungsumsetzer (284) gewandelten zweiten Betriebsspannung betrieben zu werden.

14. Mehrspannungsbordnetz (10) nach einem der vorstehenden Ansprüche, **dadurch gekennzeichnet, dass** das erste Schaltungsmodul (300) einen Ausgleichskondensator (360) umfasst, der einen ersten Elektrodenanschluss (360.1) und einen zweiten Elektrodenanschluss (360.2) aufweist, wobei der erste Elektrodenanschluss (360.1) auf den ersten Masseanschluss (150) und der zweite Elektrodenanschluss (360.2) auf den zweiten Masseanschluss (250) geschaltet ist.

15. Schaltungsmodul (300) zum Trennen von Teilnetzen (100, 200) eines Mehrspannungsbordnetzes (10) eines Fahrzeugs, wobei das Mehrspannungsbordnetz (10) aufweist:
- ein erstes Teilnetz (100), das ausgebildet ist, bei einer ersten Betriebsspannung (180) betrieben zu werden, und das einen Senderempfänger (110) umfasst, der über einen ersten Masseanschluss (150) auf Masse geschaltet ist, wobei der Senderempfänger (110) ausgebildet ist, ein erstes Steuersignal bereitzustellen;
- ein zweites Teilnetz (200), das ausgebildet ist, bei einer zweiten Betriebsspannung betrieben zu werden, und das eine Steuereinheit (210) umfasst, die über einen zweiten Masseanschluss (250) auf dieselbe Masse geschaltet ist; und
- einen ersten Steuersignalpfad (102), der einen ersten Signalausgang (120) des Senderempfängers (110) an einen ersten Signaleingang (220) der Steuereinheit (210) koppelt, und der ausgebildet und angeordnet ist, das erste Steuersignal vom ersten Signalausgang (120) an den ersten Signaleingang (220) zu übertragen;
**dadurch gekennzeichnet, dass**
das Schaltungsmodul (300) für eine Anordnung im ersten Steuersignalpfad (102) ausgestaltet ist und ferner ausgebildet ist,
- den ersten Steuersignalpfad (102) einerseits auf den ersten Masseanschluss (150) und/oder auf den zweiten Masseanschluss (250) zu schalten und andererseits mit der ersten Betriebsspannung (180) und/oder mit der zweiten Betriebsspannung zu beaufschlagen; und
- einen sperrenden Zustand einzunehmen, bei dem die Übertragung des ersten Steuersignals von dem ersten Signalausgang (120) zu dem ersten Signaleingang (220) über den ersten Steuersignalpfad (102) unterbunden wird.

## Claims

1. Multi-voltage on-board electrical system (10) for a vehicle, having
- a first electrical subsystem (100) which is designed to be operated at a first operating voltage (180) and which comprises a transceiver (110) which is connected to ground by means of a first ground connection (150), wherein the transceiver (110) is designed to provide a first control signal;
- a second electrical subsystem (200) which is designed to be operated at a second operating voltage and which comprises a control unit (210) which is connected to the same ground by means of a second ground connection (250); and
- a first control signal path (102) which couples a first signal output (120) of the transceiver (110) to a first signal input (220) of the control unit (210) and which is designed and arranged to transmit the first control signal from the first signal output (120) to the first signal input (220);
**characterized in that**
the first control signal path (102) comprises a first circuit module (300) by means of which the first control signal path (102) is firstly connected to the first ground connection (150) and/or to the second ground connection (250) and is secondly supplied with the first operating voltage (180) and/or with the second operating voltage, wherein the first circuit module (300) is designed to assume a blocking state in which the transmission of the first control signal from the first signal output (120) to the first signal input (220) via the first control signal path (102) is suppressed.

2. Multi-voltage on-board electrical system (10) according to Claim 1, **characterized in that** the first circuit module (300) comprises a first transistor (310; 330) with a first signal connection (310.1; 330.1) and a first control connection (310.3; 330.3), wherein the first signal connection (310.1; 330.1) is connected to the first or second ground connection (150; 250) and wherein the first control connection (310.3; 330.3) is connected to the first signal output (120).

3. Multi-voltage on-board electrical system (10) according to Claim 2, **characterized in that** the first transistor (310) is a current-controlled transistor, wherein the first signal connection (310.1) is an emitter connection (310.1) of the current-controlled transistor which is connected to the first ground connection (150), and wherein the first control connection (310.3) is a base connection.

4. Multi-voltage on-board electrical system (10) according to Claim 2 or 3, **characterized in that** the first circuit module comprises a second transistor (320) which, for the purpose of transmitting the first control signal to the first signal input (220), is coupled to the first transistor (310) and is firstly supplied with the second operating voltage and is secondly connected to the second ground connection (250) and to the first signal input (220).

5. Multi-voltage on-board electrical system (10) according to Claim 2, **characterized in that** the first transistor (330) is a field-effect transistor which has a second signal connection (330.2), wherein the first signal connection (330.1) is a gate connection, the second signal connection (330.2) is a source connection which is connected to the first signal input (220), and wherein the first control connection (330.3) is a drain connection.

6. Multi-voltage on-board electrical system (10) according to Claim 1, **characterized in that** the first circuit module (300) comprises a first diode (340) which has an anode connection (340.1) and a cathode connection (340.2), wherein the first signal output (120) is connected to the anode connection (340.1), and wherein the cathode connection (340.2) is connected to the first signal input (220) and to the second ground connection (250) via a resistor (342).

7. Multi-voltage on-board electrical system (10) according to Claim 1, **characterized in that** the first circuit module (300) comprises a capacitor (350) which has a first electrode connection (350.1) and a second electrode connection (350.2), wherein
- the first signal output (120) is connected to the first electrode connection (350.1) and the first signal input (220) is connected to the second electrode connection (350.2).

8. Multi-voltage on-board electrical system (10) according to Claim 7, **characterized in that**
- the first electrode connection (350.1) is supplied with the first operating voltage via a first pull-up resistor (352); and
- the second electrode connection (350.2) is supplied with the second operating voltage via a second pull-up resistor (354).

9. Multi-voltage on-board electrical system (10) according to Claim 7 or 8, **characterized in that** the second electrode connection (350.2) is connected to the second ground connection (250) via a second diode (356) which is arranged in the reverse direction.

10. Multi-voltage on-board electrical system (10) according to one of the preceding claims,
- the control unit (210) being designed to provide a second control signal;
- the multi-voltage on-board electrical system (10) having a second control signal path (210) which couples a second signal output (240) of the control unit (210) to a second signal input (140) of the transceiver (110) and which is designed and arranged to transmit the second control signal from the second signal output (240) to the second signal input (140),
**characterized in that**
the second control signal path (201) comprises a second circuit module (400) by means of which the second control signal path (210) is firstly connected to the first ground connection (150) and/or to the second ground connection (250) and is secondly supplied with the first operating voltage (180) and/or with the second operating voltage, wherein the second circuit module (400) is designed to assume a blocking state in which the transmission of the second control signal from the second signal output (240) to the second signal input (140) is suppressed.

11. Multi-voltage on-board electrical system (10) according to one of the preceding claims, **characterized in that** the first control signal path (102) and/or the second control signal path (201) is a unidirectional control signal path.

12. Multi-voltage on-board electrical system (10) according to one of the preceding claims, **characterized in that** the transceiver (110) comprises an LIN transceiver which is designed to be operated at the first operating voltage.

13. Multi-voltage on-board electrical system (10) according to one of the preceding claims, **characterized in that** the control unit (210) has a microcontroller which is designed to be operated at a second operating voltage which is converted by a voltage converter (284).

14. Multi-voltage on-board electrical system (10) according to one of the preceding claims, **characterized in that** the first circuit module (300) comprises a compensation capacitor (360) which has a first electrode connection (360.1) and a second electrode connection (360.2), wherein the first electrode connection (360.1) is connected to the first ground connection (150) and the second electrode connection (360.2) is connected to the second ground connection (250).

15. Circuit module (300) for disconnecting electrical subsystems (100, 200) of a multi-voltage on-board electrical system (10) of a vehicle, wherein the multi-voltage on-board electrical system (10) has:
- a first electrical subsystem (100) which is designed to be operated at a first operating voltage (180) and which comprises a transceiver (110) which is connected to ground by means of a first ground connection (150), wherein the transceiver (110) is designed to provide a first control signal;
- a second electrical subsystem (200) which is designed to be operated at a second operating voltage and which comprises a control unit (210) which is connected to the same ground by means of a second ground connection (250); and
- a first control signal path (102) which couples a first signal output (120) of the transceiver (110) to a first signal input (220) of the control unit (210) and which is designed and arranged to transmit the first control signal from the first signal output (120) to the first signal input (220);
**characterized in that** the circuit module (300), for an arrangement in the first control signal path (102), is configured and further designed
- to firstly connect the first control signal path (102) to the first ground connection (150) and/or to the second ground connection (250) and to secondly supply the said first control signal path with the first operating voltage (180) and/or with the second operating voltage; and
- to assume a blocking state in which the transmission of the first control signal from the first signal output (120) to the first signal input (220) via the first control signal path (102) is suppressed.

## Revendications

1. Réseau de bord à tensions multiples (10) pour un véhicule, comprenant
- un premier réseau partiel (100) qui est configuré pour fonctionner à une première tension de service (180) et qui comporte un émetteur-récepteur (110), lequel est commuté sur la masse par le biais d'une première borne de masse (150), l'émetteur-récepteur (110) étant configuré pour délivrer un premier signal de commande ;
- un deuxième réseau partiel (200) qui est configuré pour fonctionner à une deuxième tension de service et qui comporte une unité de commande (210), laquelle est commutée sur la même masse par le biais d'une deuxième borne de masse (250) ; et
- un premier trajet de signal de commande (102) qui connecte une première sortie de signal (120) de l'émetteur-récepteur (110) à une première entrée de signal (220) de l'unité de commande (210) et qui est configuré et disposé pour transmettre le premier signal de commande de la première sortie de signal (120) à la première entrée de signal (220) ;
**caractérisé en ce que**
le premier trajet de signal de commande (102) comporte un premier module de commutation (300) par le biais duquel le premier trajet de signal de commande (102) est commuté d'une part sur la première borne de masse (150) et/ou sur la deuxième borne de masse (250) et, d'autre part, est alimenté avec la première tension de service (180) et/ou avec la deuxième tension de service, le premier module de commutation (300) étant configuré pour adopter un état de blocage avec lequel la transmission du premier signal de commande de la première sortie de signal (120) à la première entrée de signal (220) par le premier trajet de signal de commande (102) est inhibée.

2. Réseau de bord à tensions multiples (10) selon la revendication 1, **caractérisé en ce que** le premier module de commutation (300) comporte un premier transistor (310 ; 330) pourvu d'une première borne de signal (310.1 ; 330.1) et d'une première borne de commande (310.3 ; 330.3), la première borne de signal (310.1 ; 330.1) étant commutée sur la première ou la deuxième borne de masse (150 ; 250) et la première borne de commande (310.3 ; 330.3) étant commutée sur la première sortie de signal (120).

3. Réseau de bord à tensions multiples (10) selon la revendication 2, **caractérisé en ce que** le premier transistor (310) est un transistor commandé en courant, la première borne de signal (310.1) étant une borne d'émetteur (310.1) du transistor commandé en courant, laquelle est commutée sur la première borne de masse (150), et la première borne de commande (310.3) étant une borne de base.

4. Réseau de bord à tensions multiples (10) selon la revendication 2 ou 3, **caractérisé en ce que** le premier module de commutation comporte un deuxième transistor (320), lequel est connecté au premier transistor (310) pour la transmission du premier signal de commande vers la première entrée de signal (220), et est d'une part alimenté avec la deuxième tension de service et d'autre part commuté sur la deuxième borne de masse (250) ainsi que sur la première entrée de signal (220).

5. Réseau de bord à tensions multiples (10) selon la revendication 2, **caractérisé en ce que** le premier transistor (330) est un transistor à effet de champ qui possède une deuxième borne de signal (330.2), la première borne de signal (310.1) étant une borne de gâchette, la deuxième borne de signal (330.2) une borne de source qui est commutée sur la première entrée de signal (220) et la première borne de commande (330.3) étant une borne de drain.

6. Réseau de bord à tensions multiples (10) selon la revendication 1, **caractérisé en ce que** le premier module de commutation (300) comporte une première diode (30) qui possède une borne d'anode (340.1) et une borne de cathode (340.2), la première sortie de signal (120) étant commutée sur la borne d'anode (340.1) et la borne de cathode (340.2) étant commutée sur la première entrée de signal (220) ainsi que sur la deuxième borne de masse (250) par le biais d'une résistance (342).

7. Réseau de bord à tensions multiples (10) selon la revendication 1, **caractérisé en ce que** le premier module de commutation (300) comporte un condensateur (350) qui possède une première borne d'électrode (350.1) et une deuxième borne d'électrode (350.2),
- la première sortie de signal (120) étant commutée sur la première borne d'électrode (350.1) et la première entrée de signal (220) sur la deuxième borne d'électrode (350.2).

8. Réseau de bord à tensions multiples (10) selon la revendication 7, **caractérisé en ce que**
- la première borne d'électrode (350.1) est alimentée avec la première tension de service par le biais d'une première résistance de tirage au positif (352) ; et
- la deuxième borne d'électrode (350.2) est alimentée avec la deuxième tension de service par le biais d'une deuxième résistance de tirage au positif (354).

9. Réseau de bord à tensions multiples (10) selon la revendication 7 ou 8, **caractérisé en ce que** la deuxième borne d'électrode (350.2) est commutée sur la deuxième borne de masse (250) par le biais d'une deuxième diode (356) disposée dans le sens du blocage.

10. Réseau de bord à tensions multiples (10) selon l'une des revendications précédentes,
- l'unité de commande (210) est configurée pour délivrer un deuxième signal de commande ;
- le réseau de bord à tensions multiples (10) possède un deuxième trajet de signal de commande (201) qui connecte une deuxième sortie de signal (240) de l'unité de commande (210) à une deuxième entrée de signal (140) de l'émetteur-récepteur (110), et qui est configuré et disposé pour transmettre le deuxième signal de commande de la deuxième sortie de signal (240) à la deuxième entrée de signal (220) ;
**caractérisé en ce que**
le deuxième trajet de signal de commande (201) comporte un deuxième module de commutation (400) par le biais duquel le deuxième trajet de signal de commande (201) est commuté d'une part sur la première borne de masse (150) et/ou sur la deuxième borne de masse (250) et, d'autre part, est alimenté avec la première tension de service (180) et/ou la deuxième tension de service, le deuxième module de commutation (400) étant configuré pour adopter un état de blocage avec lequel la transmission du deuxième signal de commande de la deuxième sortie de signal (240) à la deuxième entrée de signal (140) est inhibée.

11. Réseau de bord à tensions multiples (10) selon l'une des revendications précédentes, **caractérisé en ce que** le premier trajet de signal de commande (102) et/ou le deuxième trajet de signal de commande (201) sont des trajets de signal de commande unidirectionnels.

12. Réseau de bord à tensions multiples (10) selon l'une des revendications précédentes, **caractérisé en ce que** l'émetteur-récepteur (110) comporte un émetteur-récepteur LIN qui est configuré pour fonctionner à la première tension de service.

13. Réseau de bord à tensions multiples (10) selon l'une des revendications précédentes, **caractérisé en ce que** l'unité de commande (210) possède un microcontrôleur qui est configuré pour fonctionner à une deuxième tension de service convertie par un convertisseur de tension (284).

14. Réseau de bord à tensions multiples (10) selon l'une des revendications précédentes, **caractérisé en ce que** le premier module de commutation (300) comprend un condensateur de compensation (360) qui possède une première borne d'électrode (360.1) et une deuxième borne d'électrode (360.2), la première borne d'électrode (360.1) étant commutée sur la première borne de masse (150) et la deuxième borne d'électrode (360.2) sur la deuxième borne de masse (250).

15. Module de commutation (300) destiné à séparer des réseaux partiels (100, 200) d'un réseau de bord à tensions multiples (10) d'un véhicule, le réseau de bord à tensions multiples (10) possédant :
- un premier réseau partiel (100) qui est configuré pour fonctionner à une première tension de service (180) et qui comporte un émetteur-récepteur (110), lequel est commuté sur la masse par le biais d'une première borne de masse (150), l'émetteur-récepteur (110) étant configuré pour délivrer un premier signal de commande ;
- un deuxième réseau partiel (200) qui est configuré pour fonctionner à une deuxième tension de service et qui comporte une unité de commande (210), laquelle est commutée sur la même masse par le biais d'une deuxième borne de masse (250) ; et
- un premier trajet de signal de commande (102) qui connecte une première sortie de signal (120) de l'émetteur-récepteur (110) à une première entrée de signal (220) de l'unité de commande (210) et qui est configuré et disposé pour transmettre le premier signal de commande de la première sortie de signal (120) à la première entrée de signal (220) ;
**caractérisé en ce que**
le module de commutation (300) est configuré pour un arrangement dans le premier trajet de signal de commande (102) et est en outre conçu,
- pour commuter le premier trajet de signal de commande (102) d'une part sur la première borne de masse (150) et/ou sur la deuxième borne de masse (250) et, d'autre part, l'alimenter avec la première tension de service (180) et/ou avec la deuxième tension de service ; et
- pour adopter un état de blocage avec lequel la transmission du premier signal de commande de la première sortie de signal (120) à la première entrée de signal (220) par le premier trajet de signal de commande (102) est inhibée.
